# DEMANDE DE BREVET EUROPEEN

(11) **EP 2 103 493 A1**
(43) Date de publication de la demande: **23.09.2009**
(21) Numéro de dépôt: 09155658.9
(22) Date de dépôt: 19.03.2009
(51) Int. Cl.: B60T 8/40, B60T 13/74

(54) **Système de contrôle de stabilité et de trajectoire d'un véhicule automobile utilisant un servofrein actif**

(30) Priorité: 20.03.2008 FR 0851827
(71) Demandeur: PEUGEOT CITROËN AUTOMOBILES S.A., 78140 Vélizy Villacoublay (FR)
(72) Inventeur: Zink, Eric, 92700 Colombes (FR); Blanc, Fabrice, 38080 L'Isle d'Abeau (FR)

(57) **Abrégé**

L'invention se rapporte à un système de contrôle de stabilité et de trajectoire d'un véhicule automobile, apte à moduler individuellement la pression hydraulique alimentant chacun de quatre éléments de frein associés à chacune de quatre roues d'un véhicule automobile et comprenant :
- un maître cylindre tandem (3) alimentant individuellement deux circuits de freinage (C₁,C₂), chaque circuit de freinage alimentant deux éléments de frein ;
- un servofrein (2) destiné à agir sur le maître cylindre (3), apte à moduler un effort reçu de la pédale de commande de frein (1) et à générer un effort en l'absence d'action sur la pédale (1) de commande ;
- une électrovanne d'admission (6a,6b,6c,6d) d'admission normalement ouverte associée à chacun des éléments de frein ;
- une électrovanne d'échappement (13a,13b,13c,13d) normalement fermée associée à chacun des éléments de frein ;
le système étant apte à augmenter ou diminuer la pression individuellement dans un ou plusieurs éléments de frein par actionnement des électrovanne(s) d'admission (6a,6b,6c,6d) et d'échappement (13a,13b,13c,13d) associée(s) à (aux) l'élément de frein concerné(s) conjointement à l'utilisation du servofrein (2).
L'invention concerne également un procédé destiné à être mis en oeuvre dans un véhicule muni d'un tel système de contrôle de stabilité et de trajectoire ainsi qu'un véhicule automobile pourvu d'un tel système de contrôle de stabilité et de trajectoire ou mettant en oeuvre le procédé.

## Description

La présente invention est relative à un système de contrôle de stabilité et de trajectoire pour un véhicule automobile.

Un système de contrôle de stabilité et de trajectoire, connu notamment sous le nom d'E.S.P., a pour objectif d'augmenter ou de générer le couple de freinage appliqué à une roue si une unité de contrôle électronique en charge de la commande du système détecte qu'une consigne conducteur est inexistante, insuffisante ou au contraire trop importante, au regard d'une situation de stabilité du véhicule, cette situation étant déterminée à partir de mesures effectuées par différents capteurs installés dans le véhicule.

L'action principale d'un système de contrôle de stabilité consiste donc à augmenter ou générer un couple de freinage si la consigne du conducteur appliquée à la pédale de frein est insuffisante ou inexistante

Parallèlement, il est également connu des systèmes d'anti-blocage des roues lors d'un freinage (couramment appelé A.B.S). Le système A.B.S. permet de conserver la dirigeabilité du véhicule en situation de freinage d'urgence ou sur revêtement à faible adhérence. A cet effet, un capteur de vitesse est disposé au niveau de chaque roue. A partir de ces mesures de vitesse, un calculateur évalue le glissement relatif de chaque roue et régule la puissance du freinage sur chacune des roues de façon à empêcher le blocage de l'une d'entre elles.

Les moyens de calcul et de régulation du système de contrôle de stabilité et de trajectoire sont en outre couramment employés afin de réaliser un système d'anti-patinage (couramment appelé A.S.R.).

Les systèmes de contrôle de stabilité et de motricité existants sont des systèmes hydrauliques se greffant sur le (les) circuit(s) de freinage du véhicule, et, le cas échéant, constituent un système unique assurant les fonctions de contrôle de stabilité, d'antiblocage et d'anti-patinage.

De tels systèmes équipent aujourd'hui couramment les véhicules de moyenne et haute gammes, mais, en raison d'un surcoût important, sont encore peu installés sur les véhicules d'entrée de gamme, en dépit de leur apport incontestable en terme de sécurité.

Atténuer l'impact économique de l'intégration d'un système de contrôle de stabilité dans un véhicule automobile constitue ainsi un enjeu primordial pour les constructeurs automobiles.

Le surcoût important de ces systèmes est, pour la plus grande part, dû à la partie opérative, comprenant des composants hydrauliques dont l'intégration s'avère coûteuse et complexe, comme expliqué ci-après.

Le système de freinage d'un véhicule dépourvu de système de régulation comporte, de manière connue, un circuit hydraulique permettant d'actionner des étiers de frein équipant chacun des disques de frein dont est pourvue chacune des roues (éventuellement remplacés par un ensemble tambour/mâchoire). Le circuit hydraulique est mis en pression lorsque le conducteur exerce un effort sur la pédale de frein au moyen d'un maître-cylindre alimenté par un réservoir de fluide. Les exigences règlementaires de sécurité imposent de prévoir deux circuits de freinage indépendants, chaque circuit assurant le freinage de deux roues, par exemple, une roue avant et une roue arrière de côté opposé. On utilise à cet effet un maître-cylindre dit « tandem », comportant deux chambres de compression alimentant chacune un des deux circuits. Entre le maître-cylindre et la pédale est interposé un dispositif d'amplification, le servofrein (aussi connu sous le nom de « booster »).

L'implantation d'un système de contrôle de stabilité et de trajectoire sur un tel système de freinage impose généralement la présence sur chacun des deux circuits de freinage d'une pompe, d'une électrovanne, ouverte en position de repos, permettant d'isoler le maître-cylindre tandem du circuit hydraulique, d'une électrovanne d'aspiration, fermée en position de repos, installée entre le maître-cylindre tandem et la pompe (côté admission), d'électrovannes d'admission et d'échappement pour chacun des étriers, ainsi que d'un accumulateur basse pression.

L'un des éléments les plus coûteux de cet ensemble est la pompe hydraulique et il est connu du document DE10338046 d'utiliser un servofrein « actif » afin d'effectuer les régulations nécessaires en cas d'action insuffisante ou inexistante de la part du conducteur (ESP, ASR...). Le terme de servofrein actif est utilisé ici par opposition au servofrein classique, décrit plus haut, qui est uniquement apte à amplifier un effort non nul, mais ne peut en aucun cas générer un effort si le conducteur n'appuie pas sur la pédale. Cependant, le système décrit dans ce document conserve un bloc hydraulique conventionnel, c'est-à-dire comprenant au moins une pompe hydraulique, pour toutes les actions nécessitant de diminuer l'effort imposé par le conducteur, et donc la pression dans le circuit hydraulique (i.e. pour l'ABS).

La présente invention a pour objet de pallier les inconvénients de l'art antérieur en proposant un système et un procédé de contrôle de la stabilité, de la trajectoire et de l'adhérence d'un véhicule fonctionnant sans pompe hydraulique, quelle que soit l'action de régulation envisagée : augmentation, diminution ou génération d'une pression de freinage.

De manière plus précise, l'invention concerne un système de contrôle de stabilité et de trajectoire d'un véhicule automobile, apte à moduler individuellement la pression hydraulique alimentant chacun de quatre éléments de frein d'un véhicule automobile et comprenant :
- un maître cylindre tandem alimentant individuellement deux circuits de freinage, chaque circuit de freinage alimentant deux éléments de frein ;
- un servofrein destiné à agir sur le maître cylindre, apte à moduler un effort reçu de la pédale de commande de frein et à générer un effort en l'absence d'action sur la pédale de commande ;
- une électrovanne d'admission d'admission normalement ouverte associée à chacun des éléments de frein ;
- une électrovanne d'échappement normalement fermée associée à chacun des éléments de frein ;

le système étant apte à augmenter ou diminuer la pression individuellement dans un ou plusieurs éléments de frein par actionnement des électrovanne(s) d'admission et d'échappement associée(s) à (aux) l'élément de frein concerné(s) conjointement à l'utilisation du servofrein.

Dans une réalisation préférentielle, un élément de frein est la combinaison d'un étrier de frein et d'un disque associés à une roue

Dans une réalisation, dans laquelle le système permet de réaliser une fonction d'antiblocage des roues, le système est apte à détecter le risque de blocage d'une ou plusieurs roues lors d'un freinage, à isoler la(les) roue(s) bloquée en activant l'électrovanne d'admission associée puis à diminuer l'effort de freinage en activant l'électrovanne d'échappement associée pour diminuer la pression dans l'élément de frein.

Dans une réalisation, dans laquelle le système permet de réaliser une fonction de contrôle de stabilité et de trajectoire, le système est apte à générer un effort de freinage individuellement dans une ou plusieurs roue(s) en isolant les autres roues en activant les électrovannes d'admission associées (6b, 6c, 6d) puis à activer le servofrein pour générer un effort de freinage et ralentir la rotation de la (les) roue(s).

Selon d'autres réalisations encore, le système comprend une ou plusieurs des caractéristiques suivantes, seule ou en combinaison :
- chaque circuit de freinage du système comporte une ligne de retour reliant la sortie des électrovannes d'échappement du circuit concerné au réservoir du maître cylindre,
- chaque circuit de freinage du système comporte un accumulateur hydraulique basse pression disposé à la sortie des électrovannes d'échappement du circuit concerné,
- un clapet est disposé en série à la sortie de chaque accumulateur,
- un clapet est associé en parallèle à chacun des électrovannes d'amission,
- un clapet est monté en série à la sortie de chaque électrovanne d'échappement ,
- le servofrein est un actionneur électromécanique réversible,
- le servofrein est un actionneur électromécanique irréversible, le servofrein étant lié à la pédale par un mécanisme d'accouplement.,
- au moins une des électrovannes d'admission est une électrovanne de type proportionnel.
- au moins une des électrovannes d'échappement est une électrovanne de type « tout ou rien »,
- au moins l'un des deux circuits de freinage comporte un capteur de pression hydraulique,
- le système comprend un capteur d'effort associé à la pédale de commande de frein,
- le système comprend un capteur de position associé à la pédale de commande de frein,
- chaque circuit de freinage comprend un accumulateur haute pression,
- le système comprend un simulateur de course et d'effort relié à la pédale de frein.

L'invention concerne également un procédé de contrôle de stabilité et de trajectoire de véhicule, et/ou d'antiblocage de roues, destiné à être mis en oeuvre dans un véhicule automobile muni d'un système conforme à l'invention, ce procédé comprenant les étapes suivantes, qui consistent à :
- surveiller les vitesses de rotation des roues;
- détecter un risque de blocage d'une roue ;
- activer l'électrovanne d'admission de la roue bloquée;
- activer l'électrovanne d'échappement de la roue bloquée
- maintenir ou moduler l'effort d'assistance fourni par le servofrein afin de maintenir la pression dans les étriers des roues non bloquées tandis que,
- lorsque la roue bloquée se débloque; désactiver les électrovannes d'admission et d'échappement associées.

Dans une réalisation, le procédé comprend, en outre, les étapes suivantes, consistant à :
- lorsqu'un écart survient entre les trajectoires réelle et souhaitée, déterminer une roue devant être freinée pour diminuer cet écart, ainsi que l'effort de freinage à appliquer à cette roue;
- activer les électrovannes d'admission des autres roues.
- activer le servofrein pour générer l'effort de freinage nécessaire sur la roue;
- lorsque l'écart entre les trajectoires réelle et souhaitée est corrigé, désactiver le servofrein;
- désactiver les électrovannes d'admission des roues non bloquées.

L'invention concerne également un véhicule automobile pourvu d'un système conforme à l'invention, ou mettant en oeuvre un procédé conforme à l'invention.

Un exemple de réalisation de l'invention est décrit ci-après, de manière non limitative, en relation avec les figures annexées, parmi lesquelles :
- la figure 1 montre un schéma d'un système selon l'invention;
- les figures 2 et 3 montrent l'état du système de la figure 1, respectivement lors de phases classiques de freinage et de défreinage;
- la figure 4 montre l'état du système de la figure 1 lors d'une phase de freinage nécessitant la mise en oeuvre de la fonction d'antiblocage ;
- les figures 5 et 6 montrent une variante du système représenté à la figure 1.

Les éléments identiques d'une variante à l'autre conservent les mêmes références sur les différentes figures.

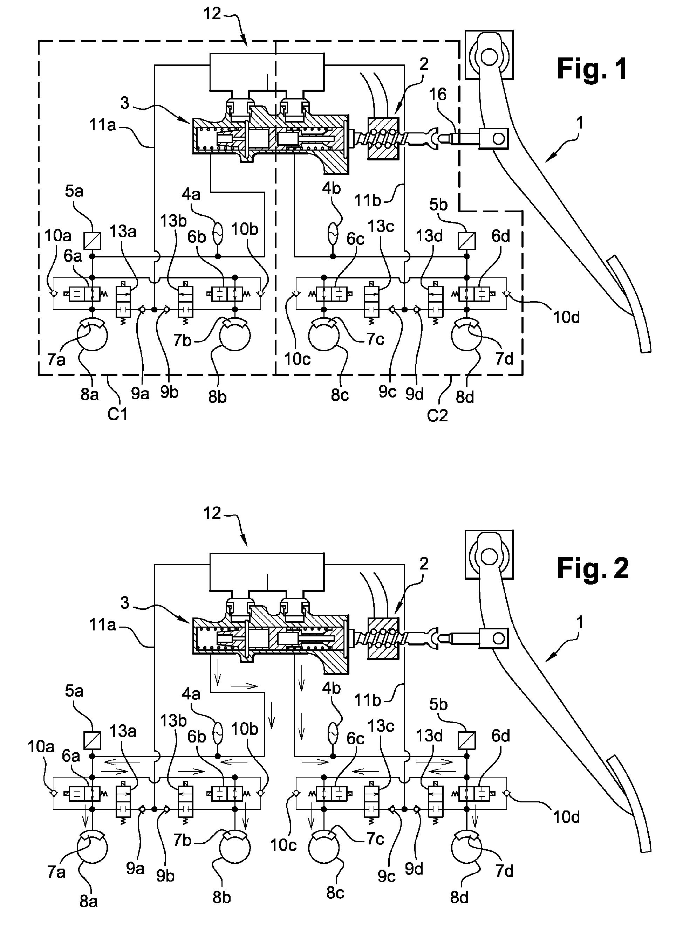

La figure 1 représente un schéma de principe d'un système selon l'invention. Un maître cylindre tandem 3 relié à un réservoir 12 de fluide hydraulique permet d'alimenter deux circuits de freinage indépendants et identiques C₁ et C₂. Chacun des circuits de freinage est associé à deux des quatre roues représentées ici par leur disque de frein 8a, 8b, 8c, 8d et permet d'actionner deux étriers des quatre étriers respectifs 7a, 7b, 7c, 7d. A chaque étrier est associée une électrovanne d'admission normalement ouverte et une électrovanne d'échappement normalement fermée, dans l'exemple respectivement quatre électrovannes proportionnelles 6a, 6b, 6c, 6d et quatre électrovannes de type "tout ou rien" 13a, 13b, 13c, 13d. Chaque vanne d'admission 6a, 6b, 6c, 6d est dérivée par une ligne d'échappement comportant un clapet 10a, 10b, 10c, 10d. Chaque circuit de freinage comporte une ligne 11a, 11b de retour au réservoir 12. De manière optionnelle, un clapet 9a, 9b, 9c, 9d est monté en série à la sortie de chaque électrovanne d'échappement 13a, 13b, 13c, 13d. Au moins l'un des circuits de freinage C₁ et C₂ est en outre équipé d'un capteur de pression. Dans l'exemple de la figure 1, chaque circuit comporte un capteur de pression 5a, 5b propre.

Selon les cas, les électrovannes d'admission 6a, 6b, 6c, 6d peuvent être de type tout ou rien. Une électrovanne tout ou rien est caractérisée par deux états, un état de repos (qui peut être ouvert ou fermé), et un état d'activation (qui est l'état contraire). Une électrovanne proportionnelle comporte une infinité d'états entre un état de repos et un état d'activation complète, ce qui permet de procéder à une ouverture et une fermeture progressives. Il peut également s'agir d'électrovanne « débit », c'est-à-dire permettant de contrôler un débit, ou d'électrovanne « pression », c'est-à-dire permettant de contrôler la différence de pressions appliquée à cette électrovanne.

Le maître cylindre 3 est actionné par un servofrein actif réversible 2 relié à une pédale de frein 1. Le servofrein 2 est un actionneur électromécanique réversible qui permet d'amplifier l'effort reçu de la pédale de frein 1, comme un servofrein classique, mais peut également amoindrir cet effort (création d'un effort résistant) ou encore générer seul un effort en l'absence d'action sur la pédale de frein de la part du conducteur. L'effort reçu de la pédale est mesuré grâce à un capteur d'effort 16. Par réversible, on entend que l'actionneur ne s'oppose pas au mouvement de la pédale de frein lorsque celui-ci n'est pas alimenté. En variante, on peut envisager l'utilisation d'un actionneur irréversible en combinaison avec un système d'accouplement débrayable, afin que, pour des raisons de sécurité il soit toujours possible de freiner, notamment lorsque l'actionneur tombe en panne.

On décrit ci-après le fonctionnement du système selon l'invention à travers les phases de freinage et défreinage classiques, ainsi qu'à travers des phases de régulation du système de contrôle de stabilité et de trajectoire.

Ainsi, la figure 2 montre les mouvements de fluide hydraulique dans le circuit lors d'un freinage classique. Lorsque le conducteur appuie sur la pédale 1, le servofrein 2 amplifie cet effort et transmet l'effort résultant au maître cylindre 3. La pression générée par le maître cylindre 3 est transmise par les électrovannes d'admission 6a, 6b, 6c, 6d normalement ouvertes aux étriers 7a, 7b, 7c, 7d. De manière classique, la pression reçue par les étriers est convertie en effort de freinage.

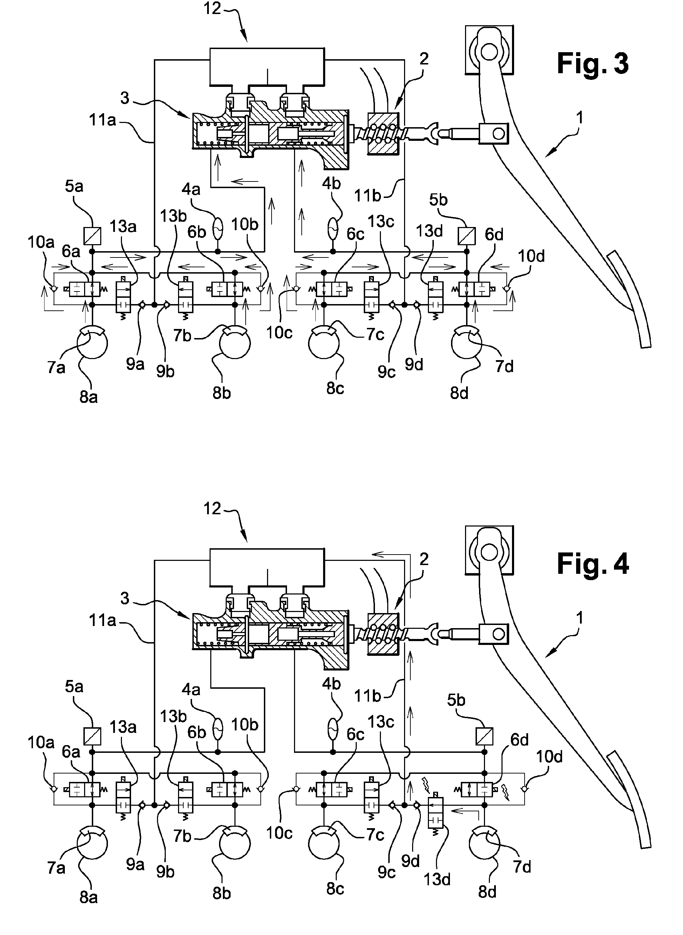

La figure 3 montre l'état du circuit lors d'une phase de défreinage, c'est-à-dire lorsque le conducteur relâche la pédale de frein à l'issue d'une phase de freinage. A cet instant, le fluide contenu sous pression dans les étriers 7a, 7b, 7c, 7d reflue vers le maître cylindre 3 à travers les électrovannes 6a, 6b, 6c, 6d qui sont passantes, ainsi qu'à travers les clapets 10a, 10b, 10c, 10d.

La figure 4 montre le circuit lors d'une phase de régulation du système selon l'invention, dans laquelle il est nécessaire de faire chuter la pression dans un seul étrier, par exemple lorsqu'une roue se bloque lors d'une phase de freinage. Lorsqu'un risque de blocage d'une roue est détecté, dans l'exemple de la figure 4 la roue correspondant au disque 8d et son étrier associé 7d, l'électrovanne d'admission normalement ouverte 6d de cet étrier est activée. L'étrier 7d est alors isolé du circuit hydraulique, sa pression ne peut plus augmenter. L'électrovanne d'échappement normalement fermée 13d est activée ce qui permet au fluide sous pression contenu dans l'étrier 7d de retourner dans le réservoir 12 du maître cylindre tandem 3 à travers le clapet 9d. L'activation des électrovannes 6d et 8d peut, selon les cas, ne pas être simultanée ni totale. Une fois la pression cible atteinte, l'électrovanne d'échappement 8d est désactivée. Pour augmenter de nouveau la pression de cet étrier 7d, il suffit de désactiver l'électrovanne d'admission 6d si la pression du maître cylindre 3 mesurée par le capteur 5b est supérieure à celle de l'étrier.

Dans le cas où le conducteur relâche la pédale de frein et que l'électrovanne d'admission 6d est activée (i.e. fermée), la pression de l'étrier 7d peut diminuer car le fluide contenu sous pression dans l'étrier aura la possibilité de retourner au réservoir 12 par l'intermédiaire du clapet 10d.

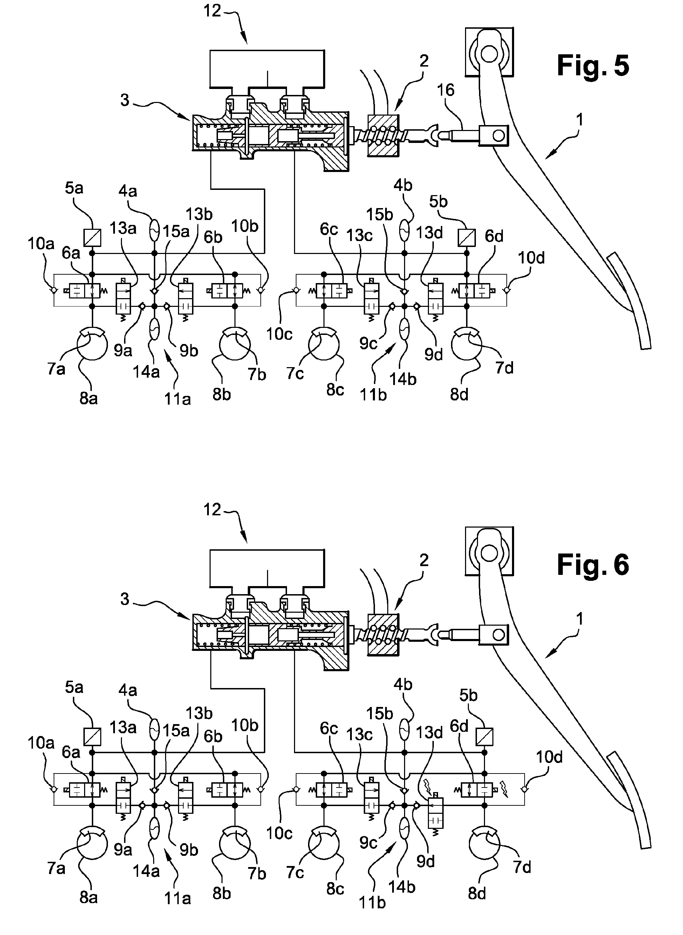

La figure 5 montre l'état du circuit lors d'une phase de régulation nécessitant une pression de freinage sans action du conducteur, ou avec une action du conducteur insuffisante. Cela correspond notamment à des phases d'actionnement de l'ESP. Dans ce cas, si la pression mesurée par les capteurs 5a, 5b est inférieure à la pression requise, le servofrein 2 est activé et génère ainsi directement la pression requise. Si, lors de cette phase, le conducteur appuie finalement sur la pédale de frein ou augmente suffisamment la pression qu'il exerçait, l'effort que le conducteur exerce sur la pédale s'ajoute alors à l'effort déjà fourni par le servofrein 2.

Dans une variante, le système comprend un capteur de déplacement et/ou d'effort 16 associé à la pédale de frein 1. Ainsi l'information sur la position de la pédale, ou la dérivée temporelle de celle-ci permet de réaliser des fonctions supplémentaires en faisant varier la loi d'assistance qui est assurée par le servofrein 2. Par exemple, on peut réaliser la fonction d'aide au freinage d'urgence, dans laquelle on détecte un enfoncement très brusque de la pédale de frein et l'on augmente l'effort d'assistance du servofrein 2 par rapport à l'effort d'assistance nominal. En l'absence de capteur de déplacement, on peut cependant utiliser comme information le gradient de la force appliquée par le conducteur sur la pédale de frein 1 pour réaliser la fonction d'aide au freinage d'urgence.

Dans une variante, chacun des circuits de freinage comporte un accumulateur haute pression 4a, 4b qui permet d'amortir les à coups dans le circuit lorsque le fluide hydraulique reflue, par exemple lors d'une phase de régulation antiblocage. Ces accumulateurs doivent pouvoir supporter la pression maximale admissible dans les étriers.

Dans une variante représentée sur les figures 5 et 6, chacun des circuits de freinage comporte à la sortie des électrovannes d'échappement 13a, 13b, 13c, 13d un accumulateur hydraulique basse pression 14a, 14b en remplacement des lignes de retour 11 a, 11 b, ainsi qu'un clapet 15a, 15b. Dans cette variante, le fonctionnement du système lors des phases de freinage et de défreinage est inchangé. Lorsqu'il est nécessaire de faire chuter la pression dans un étrier 7d (voir figure 6), l'électrovanne d'admission normalement ouverte 6d de cet étrier est activée. L'étrier est isolé du circuit hydraulique, sa pression ne peut plus augmenter. L'électrovanne d'échappement normalement fermée 13d est activée ce qui permet au fluide contenu sous pression dans l'étrier 7d de s'écouler à travers le clapet 9d pour remplir l'accumulateur basse pression 14b. Cet accumulateur est dimensionné (raideur et volume) de sorte qu'il peut recueillir tout le fluide qui est évacué par les électrovannes d'échappement 13d tout en ayant une augmentation de press²ion relativement faible. La pression de cet accumulateur peut être inférieure à la pression maître cylindre 3 mesurée par le capteur de pression 5b car il est isolé du circuit par le clapet 15b. L'activation des électrovannes 6d et 13d peut ne pas être simultanée ni totale. Une fois la pression cible atteinte, l'électrovanne d'échappement 13d est désactivée. Pour augmenter de nouveau la pression de cet étrier, il suffit de désactiver l'électrovanne d'admission 6d si la pression du maître cylindre mesurée par le capteur 5b est supérieure à celle de l'étrier. L'accumulateur 14b est vidé par le clapet 15b lorsqu'au cours du défreinage, la pression du maître cylindre devient inférieure à la pression de l'accumulateur 14b.

Dans le cas où le conducteur relâche la pédale de frein et que l'électrovanne d'admission est activée (fermée), la pression de l'étrier 7d peut diminuer car le fluide contenu dans l'étrier aura la possibilité de retourner au réservoir par l'intermédiaire du clapet 10d.

Dans une variante, la pédale de frein est reliée à un simulateur de course et d'effort comme il en a été développé pour les systèmes de freinage des véhicules hybrides par exemple. L'utilisation d'un tel simulateur permettrait d'améliorer le ressenti à la pédale du conducteur lors des phases de régulation de pression par l'intermédiaire du servofrein.

Dans une variante, les lignes de retour 11a et 11b peuvent être communes au deux circuits de freinage C₁ et C₂.

## Revendications

1. Système de contrôle de stabilité et de trajectoire d'un véhicule automobile, apte à moduler individuellement la pression hydraulique alimentant chacun de quatre éléments de frein associés à chacune de quatre roues d'un véhicule automobile et comprenant :
- un maître cylindre tandem (3) alimentant individuellement deux circuits de freinage (C₁, C₂), chaque circuit de freinage alimentant deux éléments de frein ;
- un servofrein (2) destiné à agir sur le maître cylindre (3), apte à moduler un effort reçu de la pédale de commande de frein (1) et à générer un effort en l'absence d'action sur la pédale (1) de commande ;
- une électrovanne d'admission (6a, 6b, 6c, 6d) normalement ouverte associée à chacun des éléments de frein ;
- une électrovanne d'échappement (13a, 13b, 13c, 13d) normalement fermée associée à chacun des éléments de frein ;
le système étant apte à augmenter ou diminuer la pression individuellement dans un ou plusieurs éléments de frein par actionnement des électrovanne(s) d'admission (6a, 6b, 6c, 6d) et d'échappement (13a, 13b, 13c, 13d) associée(s) à (aux) l'élément de frein concerné(s) conjointement à l'utilisation du servofrein (2).

2. Système selon la revendication 1, permettant de réaliser une fonction d'antiblocage des roues (8a, 8b, 8c, 8d), le système étant apte à détecter le risque de blocage d'une ou plusieurs roues (8d) lors d'un freinage, à isoler la(les) roue(s) (8d) bloquée en activant l'électrovanne d'admission (6d) associée puis à diminuer l'effort de freinage en activant l'électrovanne d'échappement associée (13d) pour diminuer la pression dans l'élément de frein.

3. Système selon la revendication 1 ou 2, permettant de réaliser une fonction de contrôle de stabilité et de trajectoire, le système étant apte à générer un effort de freinage individuellement dans une ou plusieurs roue(s) (8a) en isolant les autres roues (8b, 8c, 8d) en activant les électrovannes d'admission associées (6b, 6c, 6d) puis à activer le servofrein (2) pour générer un effort de freinage et ralentir la rotation de la (les) roue(s) (8a).

4. Système selon l'une des revendications 1 à 3, dans lequel chaque circuit de freinage (C₁, C₂) comporte une ligne de retour (11 a, 11 b) reliant la sortie des électrovannes d'échappement (13a, 13b, 13c, 13d) du circuit concerné au réservoir 12 du maître cylindre 3.

5. Système selon l'une des revendications 1 à 3, dans lequel chaque circuit de freinage (C₁, C₂) comporte un accumulateur hydraulique basse pression (14a, 14b) disposé à la sortie des électrovannes d'échappement (13a, 13b, 13c, 13d) du circuit concerné.

6. Système selon la revendication 5, dans lequel un clapet (15a, 15b) est disposé en série à la sortie de chaque accumulateur (14a, 14b).

7. Système selon l'une des revendications 1 à 6, dans lequel un clapet (10a, 10b, 10c, 10d) est associé en parallèle à chacun des électrovannes d'amission (6a, 6b, 6c, 6d).

8. Système selon l'une des revendications 1 à 7, dans lequel un clapet (9a, 9b, 9c, 9d) est monté en série à la sortie de chaque électrovanne d'échappement (13a, 13b, 13c, 13d)

9. Système selon l'une des revendications 1 à 8, dans lequel le servofrein (2) est un actionneur électromécanique réversible.

10. Système selon l'une des revendications 1 à 9, dans lequel le servofrein (2) est un actionneur électromécanique irréversible, le servofrein (2) étant lié à la pédale par un mécanisme d'accouplement.

11. Système selon l'une des revendications 1 à 10, dans lequel au moins une des électrovannes d'admission (6a, 6b, 6c, 6d) est une électrovanne de type proportionnel.

12. Système selon l'une des revendications 1 à 11, dans lequel au moins une des électrovannes d'échappement (11a, 11b, 11c, 11d) est une électrovanne de type « tout ou rien ».

13. Système selon l'une des revendications 1 à 12, dans lequel au moins l'un des deux circuits de freinage (C₁, C₂) comporte un capteur de pression hydraulique (5a, 5b).

14. Système selon l'une des revendications 1 à 13, comprenant un capteur d'effort (16) associé à la pédale de commande de frein (1).

15. Système selon l'une des revendications 1 à 14, comprenant un capteur de position associé à la pédale de commande de frein (1).

16. Système selon l'une des revendications 1 à 15, dans lequel chaque circuit de freinage (C₁, C₂) comprend un accumulateur (4a, 4b) haute pression.

17. Système selon l'une des revendications 1 à 16, comprenant un simulateur de course et d'effort relié à la pédale de frein 1

18. Procédé destiné à être mis en oeuvre dans véhicule muni d'un système selon l'une des revendications 1 à 17, comprenant les étapes de :
- surveiller les vitesses de rotation des roues (8a, 8b, 8c, 8d) ;
- détecter un risque de blocage d'une roue (8d) ;
- activer l'électrovanne d'admission (6d) de la roue bloquée (8d) ;
- activer l'électrovanne d'échappement (13d) de la roue bloquée (8d)
- maintenir ou moduler l'effort d'assistance fourni par le servofrein (2) afin de maintenir la pression dans les étriers (7a, 7b, 7c) des roues non bloquées (8a, 8b, 8c) tandis que,
- lorsque la roue bloquée (8d) se débloque ; désactiver les électrovannes d'admission et d'échappement (6d, 13d) associées.

19. Procédé selon la revendication 18, comprenant les étapes de :
- lorsqu'un écart survient entre les trajectoires réelle et souhaitée, déterminer une roue (8a) devant être freinée pour diminuer cet écart, ainsi que l'effort de freinage à appliquer à cette roue (8a) ;
- activer les électrovannes d'admission (6b, 6c, 6d) des autres roues (8b, 8c, 8d).
- activer le servofrein (2) pour générer l'effort de freinage nécessaire sur la roue (8a) ;
- lorsque l'écart entre les trajectoires réelle et souhaitée est corrigé, désactiver le servofrein (2) ;
- désactiver les électrovannes d'admission (6b, 6c, 6d) des roues non bloquées (8b, 8c, 8d).

20. Véhicule automobile pourvu d'un système selon les revendications 1 à 17.

21. Véhicule automobile mettant en oeuvre le procédé selon l'une des revendications 18 et 19.
